# EUROPEAN PATENT APPLICATION

(11) **EP 4 542 480 A1**
(43) Date of publication of application: **23.04.2025**
(21) Application number: 23823784.6
(22) Date of filing: 06.06.2023
(51) Int. Cl.: G06Q 50/10

(54) **INFORMATION PROCESSING DEVICE, INFORMATION PROCESSING METHOD, AND COMPUTER PROGRAM**

(30) Priority: 15.06.2022 JP 2022096627
(71) Applicant: OMRON Corporation, Kyoto 600-8530 (JP)
(72) Inventor: MIZUYAMA, Ryo, Kyoto-shi, Kyoto 600-8530 (JP); KURISU, Takanori, Kyoto-shi, Kyoto 600-8530 (JP)
(74) Representative: SONN Patentanwälte GmbH & Co KG
(86) International application number: PCT/JP2023/021038
(87) International publication number: WO 2023/243492

(57) **Abstract**

There is provided an information processing device 10 including: a synchronization degree computing section 103 computing, from time-series biometric information formed from plural physiological indices and of each of plural users who are carrying out a same task, a degree of synchronization of the time-series biometric information of the users; an emotion sharing degree computing section 104 computing a degree of sharing emotion among the respective users by using the degree of synchronization computed by the synchronization degree computing section 103; and a load controlling section 105 controlling changes in load of the task on the basis of a degree of achievement relating to an extent of achievement of each user with respect to the task, and the degree of sharing emotion of the respective users computed by the emotion sharing degree computing section 104.

## Description

### Technical Field

The present disclosure relates to an information processing device, an information processing method and a computer program.

### Background Art

Techniques for inferring relationships between plural persons have been disclosed. Patent Document 1 discloses a technique that aims to estimate relationships between attributes that are meaningful to a person, on the basis of time-series data of attributes relating to the body or the activities of the person.

### Prior Art Documents

### Patent Documents

Patent Document 1: Japanese Patent Application Laid-Open (JP-A) No. 2022-13409

### SUMMARY OF INVENTION

### Technical Problem

However, in a case in which plural persons simultaneously carry out a same task such as a game, rehabilitation, or answering questions, the task cannot be made to be enjoyable merely by the relationships between the plural persons being inferred.

The present disclosure was made in view of the above-described points, and an object thereof is to provide an information processing device, an information processing method and a computer program that, when plural persons are carrying out a same task, can make that task enjoyable by adjusting the degree of difficulty thereof.

### Solution to Problem

In order to achieve the above-described object, an information processing device relating to a given standpoint of the present invention has: a synchronization degree computing section computing, from time-series biometric information formed from a plurality of physiological indices of each of a plurality of users who are carrying out an identical task, a degree of synchronization of the time-series biometric information of the users; an emotion sharing degree computing section computing a degree of shared emotion among the respective users using the degree of synchronization computed by the synchronization degree computing section; and a load controlling section controlling changes in load of the task on the basis of a degree of achievement relating to an extent of achievement of each user with respect to the task, and the degree of shared emotion of the respective users computed by the emotion sharing degree computing section.

The load controlling section may control changes in the load of the task on the basis of relationships among the users.

The load controlling section may maintain the load of the task in a case in which the degree of shared emotion is a predetermined threshold value or greater, may increase the load of the task in a case in which the degree of shared emotion is less than a predetermined threshold value and the degree of achievement is a predetermined threshold value or greater, and may decrease the load of the task in a case in which the degree of shared emotion is less than a predetermined threshold value and the degree of achievement is less than a predetermined threshold value.

The load controlling section may control changes in the load, which is set in common for the plurality of users.

The load controlling section may control changes in loads that are set individually for the plural users respectively.

The emotion sharing degree computing section may compute the degree of shared emotion by multiplying each of the physiological indices configuring the time-series biometric information by a predetermined coefficient.

The coefficient may be a determined by using a trained model that infers the degree of shared emotion from the time-series biometric information.

The task may be at least any of a sport, a game, rehabilitation, or answering questions.

In order to achieve the above-described object, in an information processing method relating to another standpoint of the present invention, a processor: from time-series biometric information formed from a plurality of physiological indices of each of a plurality of users who are carrying out an identical task, computes a degree of synchronization of the time-series biometric information of the users; computes a degree of shared emotion among the respective users using the computed degree of synchronization; and controls changes in load of the task on the basis of a degree of achievement relating to an extent of achievement of each user with respect to the task, and the computed degree of shared emotion of the respective users.

In order to achieve the above-described object, a computer program relating to another standpoint of the present invention causes a computer to execute processings of: from time-series biometric information formed from a plurality of physiological indices of each of a plurality of users who are carrying out an identical task, computing a degree of synchronization of the time-series biometric information of the users; computing a degree of shared emotion among the respective users using the computed degree of synchronization; and controlling changes in load of the task on the basis of a degree of achievement relating to an extent of achievement of each user with respect to the task, and the computed degree of shared emotion of the respective users.

### Advantageous Effects of Invention

In accordance with the present disclosure, there can be provided an information processing device, an information processing method and a computer program that, when plural persons are carrying out a same task, can make that task enjoyable by adjusting the load of the task.

### BRIEF DESCRIPTION OF DRAWINGS

Fig. 1 is a drawing illustrating the schematic structure of an information processing system relating to an embodiment of the technique of the disclosure.
Fig. 2 is a block drawing illustrating hardware structures of an information processing device.
Fig. 3 is a block drawing illustrating an example of functional structures of the information processing device.
Fig. 4 is a drawing illustrating an example of information relating to performance with respect to a task.
Fig. 5 is a graph illustrating the degree of synchronization of persons simultaneously carrying out a same task.
Fig. 6 is a drawing illustrating examples of methods of computing the degree of synchronization.
Fig. 7 is a flowchart illustrating the flow of information processing by the information processing device.

### DESCRIPTION OF EMBODIMENTS

Examples of embodiments of the present disclosure are described hereinafter with reference to the drawings. Note that structural elements and portions that are the same or equivalent are denoted by the same reference numerals in the respective drawings. Further, dimensional proportions in the drawings are exaggerated for convenience of explanation, and there are cases in which they differ from actual proportions.

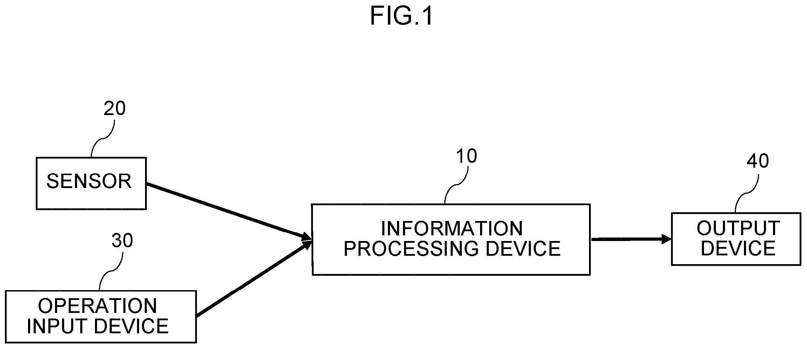

Fig. 1 is a drawing illustrating the schematic structure of an information processing system relating to a present embodiment.

The information processing system illustrated in Fig. 1 has an information processing device 10, a sensor 20, an operation input device 30, and an output device 40.

The information processing device 10 is a device that, in a case in which plural persons are simultaneously carrying out a same task, adjusts the load of that task by using a degree of sharing emotion among users and contents of the performance with respect to the task. The information processing device 10 computes the degree of sharing emotion among the users by using the degree of synchronization of biometric information of the respective persons that are acquired from the sensor 20. Further, the information processing device 10 acquires the contents of the performance with respect to the task from the operation input device 30.

Note that the task in the present embodiment means the entirety of things that can be carried out simultaneously by plural persons such as, for example, a sport, a game, rehabilitation, or answering questions. The load of a task means, for example, the entirety of things that affect the difficulty of implementing that task. Further, performance with respect to a task means the entirety of things relating to the extent of achieving the task, and includes indices such as the number of successes, the success rate or proximity to a target standard, and these indices are examples of the degree of achievement of the present invention. In the following explanation, there are cases in which the performance with respect to a task is collectively expressed by an index called the degree of demonstrating competence.

For example, in a case in which the task is ping-pong with a robot partner, the load of the task is the speed of hitting the ball by and the direction of rotation of the robot, or the positions on the ping-pong table on which the ball that was hit bounces, or the like. The performance with respect to the task is the number of times of successful return volleys, the number of times of consecutive, successful return volleys, the rate of success of return volleys, the errors of the distances from aimed-for positions and the average or dispersion of such errors, the number of times of continuing rallies, or the like.

Further, for example, in a case in which the task is rehabilitation using a stationary bike, the load of task is the heaviness of the pedals or the like, and the performance with respect to the task is the traveling speed, the traveled distance, or the like.

Moreover, for example, in a case in which the task is a shooting game, the load of the task is the positions where the enemies appear, the number of enemies that appear, the range hit by bullets shot by the player, or the like. The performance with respect to the task is the number of enemies who were defeated, the hit rate of the bullets, the number of times attacks from enemies were sustained, or the like.

The sensor 20 acquires biometric information of a person executing the task. Examples of physiological indices that are biometric information are facial expression, number of times of blinking, the timing of the blinking, body temperature, heart rate, heart rate fluctuations, pulse rate, pulse rate fluctuations, respiration rate, blood pressure, electrodermal response (sweating), pupil diameter, brain waves, myoelectricity, and concentration of stress hormones in saliva.

The operation input device 30 is a device by which a person executing the task inputs operations with respect to the task. For example, in a case in which the task is ping-pong with a robot partner, the operation input device 30 is a stereo camera that captures images of the racket that the ping-pong player uses and the ping-pong table. Further, for example, in a case in which the task is rehabilitation using a stationary bike, the operation input device 30 is the stationary bike. Moreover, for example, in a case in which the task is a shooting game, the operation input device 30 is a controller.

The output device 40 is a device that reflects the load of the task that has been adjusted by the information processing device 10. For example, in a case in which the task is ping-pong with a robot partner, on the basis of the load, the output device 40 adjusts, at the robot, the speed of hitting the ball or the bouncing position on the ping-pong table of the ball that is hit. Further, for example, in a case in which the task is rehabilitation using a stationary bike, the output device 40 adjusts the heaviness of the pedals of the stationary bike. Moreover, for example, in a case in which the task is a shooting game, the output device 40 adjusts the positions where the enemies appear, the number of enemies that appear, the range hit by bullets shot by the player, and the like.

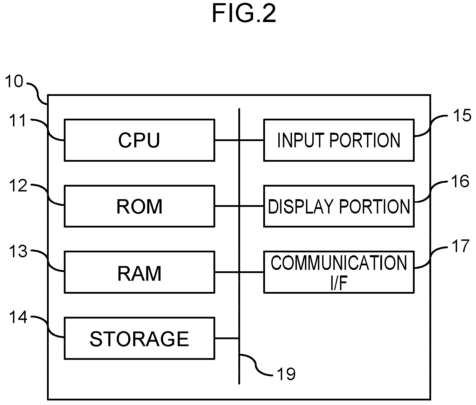

Fig. 2 is a block drawing illustrating hardware structures of the information processing device 10.

As illustrated in Fig. 2, the information processing device 10 has a CPU (Central Processing Unit) 11, a ROM (Read Only Memory) 12, a RAM (Random Access Memory) 13, a storage 14, an input portion 15, a display portion 16, and a communication interface (communication I/F) 17. These respective structures are connected so as to be able to communicate with one another via bus 19.

The CPU 11 is a central computing processing unit, and executes various programs and controls respective sections. Namely, the CPU 11 reads-out programs from the ROM 12 or the storage 14, and executes the programs by using the RAM 13 as a workspace. In accordance with the programs recorded in the ROM 12 or the storage 14, the CPU 11 carries out control of the above-described respective structures, and various types of computing processings. In the present embodiment, an information processing program that adjusts the load of the task is stored in the ROM 12 or the storage 14.

The ROM 12 stores various programs and various data. The RAM 13 temporarily stores programs and data as a workspace. The storage 14 is structured by a storage device such as an HDD (Hard Disk Drive), an SSD (Solid State Drive) or a flash memory, and stores various programs, including the operating system, and various data.

The input portion 15 includes a pointing device such as a mouse, and a keyboard, and is used in order to carry out various types of input.

The display portion 16 is, for example, a liquid crystal display, and displays various information. By employing a touch panel type display therefor, the display portion 16 may also function as the input portion 15.

The communication interface 17 is an interface for communication with other devices such as the sensor 20, the operation input device 30 and the output device 40. Standards such as, for example, Ethernet^{®}, FDDI, or Wi-Fi^{®} are used at the communication interface 17.

At the time of executing the aforementioned information processing program, the information processing device 10 realizes various functions by using the above-described hardware resources. The functional structures realized by the information processing device 10 are described.

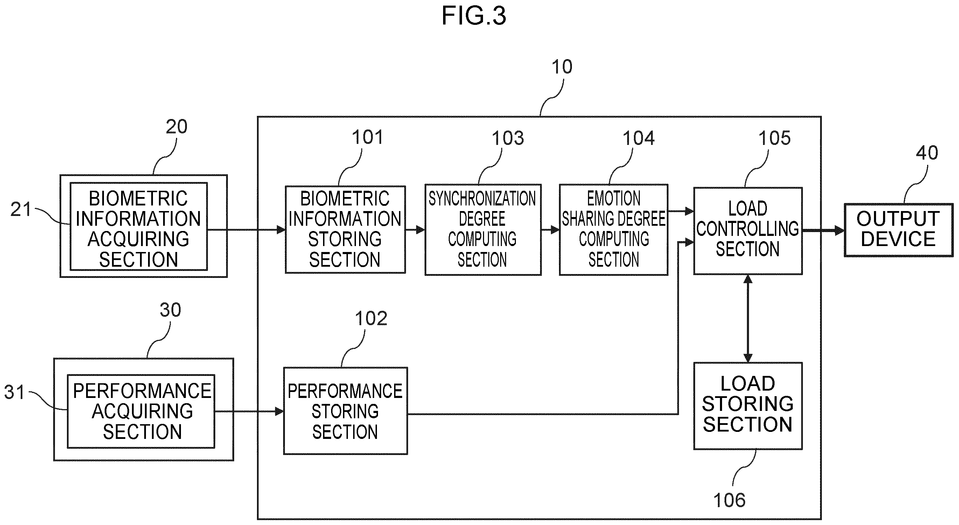

Fig. 3 is a block drawing illustrating an example of the functional structures of the information processing device 10. Examples of the functional structures of the sensor 20 and the operation input device 30 also are illustrated in Fig. 3 together therewith.

As illustrated in Fig. 3, the information processing device 10 has, as the functional structures thereof, a biometric information storing section 101, a performance storing section 102, a synchronization degree computing section 103, an emotion sharing degree computing section 104, a load controlling section 105 and a load storing section 106. These respective functional structures are realized due to the CPU 11 reading-out and executing the information processing program stored in the ROM 12 or the storage 14.

Among the functional structures illustrated in Fig. 3, the biometric information storing section 101, the performance storing section 102 and the load storing section 106 can be provided at the storage 14.

The biometric information storing section 101 stores, per person carrying out the task, time-series information of the person carrying out the task, which information is acquired by a biometric information acquiring section 21 of the sensor 20. The time-series biometric information of a person carrying out the task is data expressed as time-series data. Examples of biometric information of a person carrying out the task are facial expression, number of times of blinking, the timing of the blinking, body temperature, heart rate, heart rate fluctuations, pulse rate, pulse rate fluctuations, respiration rate, blood pressure, electrodermal response (sweating), pupil diameter, brain waves, myoelectricity, and concentration of stress hormones in saliva.

The performance storing section 102 stores information relating to the performance with respect to the task, which information is acquired by a performance acquiring section 31 of the operation input device 30.

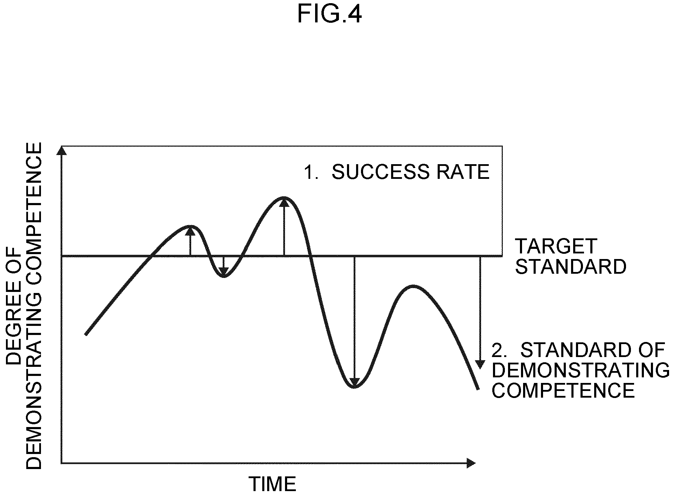

Fig. 4 is a drawing illustrating an example of information that relates to the performance with respect to the task and is stored in the performance storing section 102. Fig. 4 is a graph in which time is on the horizontal axis and the degree of demonstrating competence in the task is on the vertical axis. The graph illustrated in Fig. 4 exemplifies the success rate of the task as the degree of demonstrating competence. To what extent the degree of demonstrating competence is exceeding or is falling below a given target standard can be understood from this information.

The synchronization degree computing section 103 computes the degree of synchronization of persons carrying out the task, by using biometric information of persons carrying out the task which information is stored in the biometric information storing section 101. The degree of synchronization is an index expressing the extent to which the biometric information of the plural persons who are carrying out the task vary synchronously.

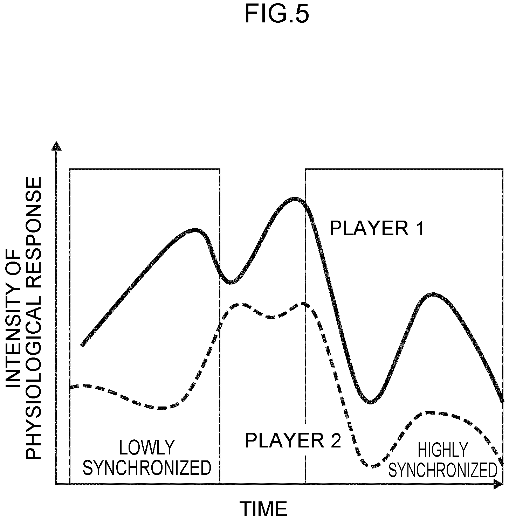

Fig. 5 is a graph for explaining the degree of synchronization between persons who are simultaneously carrying out the same task. Fig. 5 is a graph in which time is on the horizontal axis, and the intensity of the physiological response, which is based on the biometric information acquired by the biometric information acquiring section 21 of the sensor 20, is on the vertical axis. The graph of Fig. 5 illustrates changes over time in the intensities of the physiological responses of two persons who are simultaneously carrying out the same task. A section in which the two waveforms resemble one another is considered to be a section in which the degree of synchronization of the changes in the physiological response intensities is high. On the other hand, a section in which the two waveforms do not resemble one another is considered to be a section in which the degree of synchronization of the changes in the physiological response intensities is low.

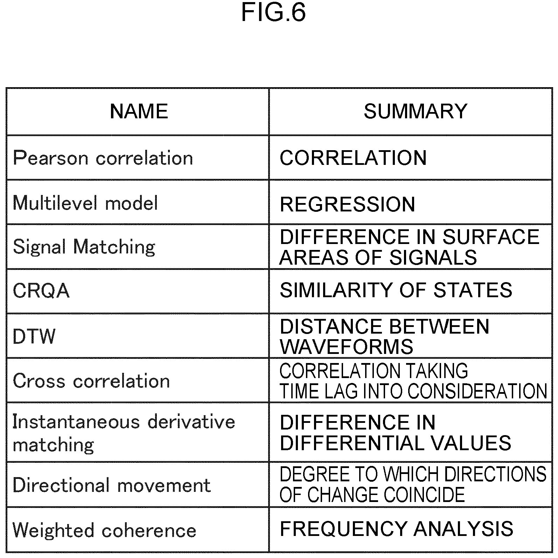

The synchronization degree computing section 103 can grasp the degree of synchronization of persons whose are simultaneously carrying out the same task, by carrying out computation with respect to the intensities of the physiological responses that are shown in the graph illustrated in Fig. 5. Fig. 6 is a drawing illustrating examples of methods of computing the degree of synchronization. Pearson correlation (correlation), multilevel model (regression), signal matching (the difference in surface areas of signals), CRQA (similarity of states), DTW (distance between waveforms), cross correlation (correlation taking the time lag into consideration), instantaneous differential matching (the difference in the differential values), directional movement (the degree to which the directions of change coincide), and weighted coherence (frequency analysis) are shown in Fig. 6 as methods of computing the degree of synchronization. The synchronization degree computing section 103 computes the degree of synchronization of the persons who are simultaneously carrying out the same task, by using at least any of the synchronization degree computing methods shown in Fig. 6. Methods of computing the degree of synchronization are, of course, not limited to the methods shown in Fig. 6.

A lowly synchronized section in which the degree of synchronization of the changes in the physiological response intensities is low, i.e., a section in which the changes in the waveforms do not resemble one another, and a highly synchronized section in which the degree of synchronization of the changes in the physiological response intensities is high, i.e., a section in which the changes in the waveforms resemble one another, are illustrated in Fig. 5.

Because there are plural biometric information, the synchronization degree computing section 103 computes the degree of synchronization for each of the biometric information. Accordingly, even if there is biometric information having a high degree of synchronization in a given time period, there may also be biometric information of a low degree of synchronization in another time period.

The emotion sharing degree computing section 104 computes the degree of sharing emotion between persons who are simultaneously carrying out the same task, on the basis of the degree of synchronization computed by the synchronization degree computing section 103. Specifically, per biometric information, the emotion sharing degree computing section 104 multiplies the degree of synchronization computed by the synchronization degree computing section 103 by a predetermined coefficient, and computes a normalized degree of sharing emotion. Each physiological index is multiplied by a coefficient, and the coefficient is an element that can be changed in accordance with the task that is being carried out. For example, adjustment of the coefficient may be carried out such that the coefficient for heart rate is made to be large for a given task, but the coefficient for heart rate is made to be small for another task.

The coefficients that are used in computing the degree of sharing emotion by the emotion sharing degree computing section 104 may be coefficients that are determined by using a trained model that infers the degree of sharing emotion from biometric information.

The load controlling section 105 controls the load of the task by using the degree of sharing emotion computed by the emotion sharing degree computing section 104 and information that relates to the performance with respect to the task and is stored in the performance storing section 102. Specifically, in a case in which the degree of sharing emotion is a predetermined threshold value or greater, the load controlling section 105 judges that the persons carrying out the task are enjoying the current task, and maintains the current load. Further, in a case in which the degree of sharing emotion is less than a predetermined threshold value, and the performance with respect to the task also is less than a predetermined threshold value, the load controlling section 105 judges that the persons carrying out the task are not enjoying the current task because the task is difficult, and carries out control so as to lessen the load. Further, in a case in which the degree of sharing emotion is less than a threshold value, and the performance with respect to the task is a predetermined threshold value or greater, the load controlling section 105 judges that the persons carrying out the task are not enjoying the current task because the task is easy, and carries out control so as to increase the load. Note that, information of the current load is stored in the load storing section 106. When the load controlling section 105 changes the load by controlling the load, the load controlling section 105 stores information of the load after the change in the load storing section 106.

Note that the load may be set to be the same for all of the persons simultaneously carrying out the same task, or may be set individually. For example, the load controlling section 105 may increase the degree of sharing emotion by increasing the load for a person skilled in the task and decreasing the load for a person unskilled in the task. The load controlling section 105 may judge whether or not a person is skilled in the task by referring to information relating to the performance with respect to the task that is stored in the performance storing section 102.

By having such a structure, the information processing device 10 can control the load of a task that is carried out simultaneously by plural persons, from the degree of sharing emotion, which is determined from the degree of synchronization of biometric information, and information relating to the performance. By controlling the load of a task that plural persons are carrying out simultaneously, the information processing device 10 can contribute to maintenance of or an improvement in the motivation for the task.

Operation of the information processing device 10 is described next.

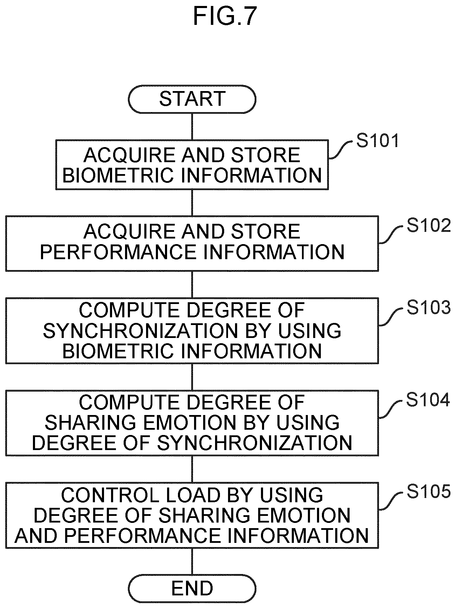

Fig. 7 is a flowchart illustrating the flow of information processing by the information processing device 10. The information processing is carried out due to the CPU 11 reading-out the information processing program from the ROM 12 or the storage 14, and expanding and executing the information processing program in the RAM 13.

In step S101, the CPU 11 acquires, from the sensor 20, biometric information of the persons who are simultaneously carrying out the same task, and stores the biometric information in the storage 14.

Next, in step S102, the CPU 11 acquires, from the operation input device 30, the contents of the operations that the respective persons carried out with respect to the task, and stores this information in the storage 14 as performance information.

Next, in step S103, by using the biometric information that was acquired and stored in step S101, the CPU 11 computes the degree of synchronization of the persons simultaneously carrying out the same task. As described above, by carrying out computation with respect to the intensities of physiological responses such as illustrated in Fig. 6, the CPU 11 computes, for each biometric information, the degree of synchronization between the persons who are simultaneously carrying out the same task.

Next, in step S104, by using the degree of synchronization computed in step S101, the CPU 11 computes the degree of sharing emotion between the persons who are simultaneously carrying out the same task. As described above, by carrying out normalization by multiplying the degree of synchronization of each biometric information by a coefficient, the CPU 11 computes a degree of sharing emotion between the persons simultaneously carrying out the same task.

Next, in step S105, the CPU 11 controls the load of the task that the plural persons are simultaneously carrying out, by using the degree of sharing emotion that was computed in step S104 and the performance information that was acquired and stored in step S101.

In a case in which the degree of sharing emotion is a predetermined threshold value or greater, the CPU 11 judges that the persons carrying out the task are enjoying the current task, and maintains the current load. Further, in a case in which the degree of sharing emotion is less than a predetermined threshold value, and the performance with respect to the task also is less than a predetermined threshold value, the CPU 11 judges that the persons who are carrying out the task are not enjoying the current task because the task is difficult, and carries out control to decrease the load. Moreover, in a case in which the degree of sharing emotion is less than a predetermined threshold value, and the performance with respect to the task is a predetermined threshold value or more, the CPU 11 judges that the persons who are carrying out the task are not enjoying the current task because the task is easy, and carries out control to increase the load.

By executing these processings, the information processing device 10 can control the load of a task that is being carried out simultaneously by plural persons, from a degree of sharing emotion, which is determined from the degree of synchronization of biometric information, and information relating to the performance. By controlling the load of a task that plural persons are simultaneously carrying out, the information processing device 10 can contribute to maintenance of or an improvement in the motivation for the task.

### (Usage Case Example 1)

Operation of the information processing device 10 is described next by presenting concrete examples of tasks. First, as a first usage case, description is given of a usage case of a ping-pong robot as an example of a task whose load is shared by plural persons. This usage case is a case in which two players alternately return a ball hit by a ping-pong robot.

The sensor 20 acquires biometric information such as the facial expression, the number of times of blinking and the frequency of blinking of each player who is playing ping-pong, and provides these biometric information to the information processing device 10. Further, the operation input device 30 acquires performance information such as the numbers of times of consecutive, successful return volleys or the rates of success of return volleys of the players. For example, performance information such as the numbers of times of consecutive, successful return volleys or the rates of success of return volleys of the players can be obtained by providing a stereo camera that images the ping-pong table as the operation input device 30, and the stereo camera acquiring three-dimensional information of the ball that the players hit and detecting the places where the ball bounces.

On the basis of the biometric information of the ping-pong players that is acquired from the sensor 20, the information processing device 10 computes a degree of sharing emotion of the players. Then, on the basis of the degree of sharing emotion of the players and the ping-pong performance information acquired from the operation input device 30, the information processing device 10 controls, as the load, the speed of hitting of the ball and the direction of rotation by the ping-pong robot, or the range of positions where the hit ball bounces on the ping-pong table.

For example, in a case in which the degree of sharing emotion between the players is higher than a predetermined threshold value, the information processing device 10 maintains the current hitting speed and rotation direction by the ping-pong robot or the range of positions where the ball bounces.

Further, for example, if the degree of sharing emotion of the players is lower than a predetermined threshold value, and the performance of the players has reached the standard from the performance information, the information processing device 10 carries out control such as accelerating the hitting speed, making the rotating direction be a direction that is hard for the player to hit, or adjusting the position of bouncing to a position that is hard for the player to hit. Further, for example, if the degree of sharing emotion of the players is lower than a predetermined threshold value, and the performance of the players has not reached the standard from the performance information, the information processing device 10 carries out control such as slowing the hitting speed, making the rotating direction be a direction that is easy for the player to hit, or adjusting the position of bouncing to a position that is easy for the player to hit.

### (Usage Case Example 2)

As the next usage case, a usage case of bicycling (buddy biking) in a virtual reality space while pedaling a stationary bike by persons in a remote location is described as an example of a task whose load is shared by plural persons.

The sensor 20 acquires biometric information such as the facial expressions, the numbers of times of blinking and the frequencies of blinking of the respective persons pedaling the stationary bike, and provides these biometric information to the information processing device 10. Note that the sensor 20 can acquire information, such as the heart rates or respirations, that fluctuate due to the exercise. However, it is unclear as to whether the cause of fluctuations is due to pedaling of the stationary bike, or is due to the relation between the persons who are together pedaling the stationary bike. Therefore, it may be made such that information that fluctuates due to the exercise is not used in computing the degree of sharing emotion.

Further, the operation input device 30 acquires performance information of the buddy biking such as the number of rotations of the pedals of the stationary bike, the traveled distance and the traveling speed, and provides these performance information to the information processing device 10.

On the basis of biometric information such as the facial expressions, the numbers of times of blinking, and the timings of the blinking of the persons pedaling the stationary bike which biometric information is acquired from the sensor 20, the information processing device 10 computes the degree of sharing emotion of the persons carrying out the buddy biking. Then, on the basis of the degree of sharing emotion of the persons carrying out the buddy biking and the buddy biking performance information acquired from the operation input device 30, the information processing device 10 controls the heaviness of pedaling the pedals of the stationary bike as the load.

For example, in a case in which the degree of sharing emotion of the persons carrying out the buddy biking is greater than or equal to a predetermined threshold value, the information processing device 10 maintains the heaviness of pedaling the pedals of the stationary bike.

Further, for example, if the degree of sharing emotion of the persons carrying out the buddy biking is lower than a predetermined threshold value, and the performance of the persons carrying out the buddy biking has reached the standard from the performance information, the information processing device 10 carries out control to increase the heaviness of pedaling the pedals. Further, for example, if the degree of sharing emotion of the persons carrying out the buddy biking is less than a predetermined threshold value, and the performance of the persons carrying out the buddy biking has not reached the standard from the performance information, the information processing device 10 carries out control to lighten the heaviness of pedaling the pedals.

### (Usage Case Example 3)

As the next usage case, a usage case of playing a same game is described as an example of a task whose load is shared by plural persons. Here, the game that the players play is a game that advances with plural persons simultaneously sharing a common space, such as a shooting game or an adventure game.

The sensor 20 acquires biometric information such as the facial expressions, the numbers of times of blinking, the frequencies of blinking, the heart rates, the respirations, and the pulse rates of the respective players playing the game, and provides these biometric information to the information processing device 10. Further, the operation input device 30 acquires performance information of the game such as the number of enemies who were defeated, the number of bullets that hit enemies, the proportion of bullets that hit enemies, the number of times of sustaining attacks from enemies, or the proportion of sustaining attacks from enemies, and provides this performance information to the information processing device 10.

On the basis of the biometric information such as the facial expressions, the numbers of times of blinking, and the timings of the blinking of the respective players playing the same game which biometric information is acquired from the sensor 20, the information processing device 10 computes the degree of sharing emotion between the players playing the same game. Then, on the basis of the degree of sharing emotion between the players playing the same game and the performance information of the game that is acquired from the operation input device 30, the information processing device 10 controls the degree of difficulty of the game as the load. The degree of difficulty of the game, which is the subject of the control, is for example the positions where the enemies appear, the number of enemies that appear, the range hit by bullets shot by the player, and the like.

### (Usage Case Example 4)

As the next usage case, a usage case in which students answer questions given by a teacher is described as an example of a task whose load is shared by plural persons.

The sensor 20 acquires biometric information such as the facial expressions, the numbers of times of blinking, the frequencies of blinking, the heart rates, the respirations, and the pulse rates of the respective students answering the questions, and provides these biometric information to the information processing device 10. Further, the operation input device 30 acquires performance information relating to the answering of the questions such as the number of correct responses to questions or the correct answer rate, and provides this performance information to the information processing device 10.

On the basis of the biometric information such as the facial expressions, the numbers of times of blinking, and the timings of the blinking of the respective students answering the same question which biometric information is acquired from the sensor 20, the information processing device 10 computes the degree of sharing emotion among the students answering the same question. Then, on the basis of the degree of sharing emotion among the students answering the same question and the performance information of answering questions which information is acquired from the operation input device 30, the information processing device 10 controls the degree of difficulty of the questions as the load.

Although embodiments of the present disclosure have been described above in detail with reference to the appended drawings, the technical scope of the present disclosure is not limited to these examples. Those with ordinary knowledge in the technical field of the present disclosure will clearly be able to conceive of various changed examples or modified examples within the scope of the technical concepts recited in the Claims, and it is to be understood that such changed examples and modified examples as well fall within the technical scope of the present disclosure as a matter of course.

Further, the effects described in the above embodiments are explanatory or exemplary, and are not limited to those described in the above embodiments. Namely, together with the effects described in the above embodiments or instead of the effects described in the above embodiments, the technique relating to the present disclosure can exhibit other effects that, from the description of the above embodiments, will be clear to those with ordinary knowledge in the technical field of the present disclosure.

Note that the information processing, which is executed by a CPU reading-in software (a program) in the above-described respective embodiments, may be executed by any of various types of processors other than a CPU. Examples of processors in this case include PLDs (Programmable Logic Devices) whose circuit structure can be changed after production such as FPGAs (Field-Programmable Gate Arrays), and dedicated electrical circuits that are processors having circuit structures that are designed for the sole purpose of executing specific processings such as ASICs (Application Specific Integrated Circuits). Further, the information processing may be executed by one of these various types of processors, or may be executed by a combination of two or more of the same type or different types of processors (e.g., plural FPGAs, or a combination of a CPU and an FPGA). Further, the hardware structures of these various types of processors are, more specifically, electrical circuits that combine circuit elements such as semiconductor elements.

Further, the above embodiments describe a form in which the program for the information processing is stored in advance (is installed) in the ROM or the storage, but the present disclosure is not limited to this. The program may be provided in a form of being recorded on a non-transitory recording medium such as a CD-ROM (Compact Disk Read Only Memory), a DVD-ROM (Digital Versatile Disk Read Only Memory), or a USB (Universal Serial Bus) memory. Further, the program may be in a form of being downloaded over a network from an external device.

The disclosure of Japanese Patent Application No. 2022-096627 filed on June 15, 2022, is, in its entirety, incorporated by reference into the present specification. All publications, patent applications, and technical standards mentioned in the present specification are incorporated by reference into the present specification to the same extent as if such individual publication, patent application, or technical standard was specifically and individually indicated to be incorporated by reference.

### Explanation of Reference Numerals

- 1: information processing system

- 10: information processing device
- 20: sensor
- 30: operation input device
- 40: output device

## Claims

1. An information processing device, comprising:
a synchronization degree computing section computing, from time-series biometric information formed from a plurality of physiological indices of each of a plurality of users who are carrying out an identical task, a degree of synchronization of the time-series biometric information of the users;
an emotion sharing degree computing section computing a degree of shared emotion among the respective users using the degree of synchronization computed by the synchronization degree computing section; and
a load controlling section controlling changes in load of the task on the basis of a degree of achievement relating to an extent of achievement of each user with respect to the task, and the degree of shared emotion of the respective users computed by the emotion sharing degree computing section.

2. The information processing device of Claim 1, wherein the load controlling section further controls changes in the load of the task on the basis of relationships among the users.

3. The information processing device of Claim 1, wherein the load controlling section:
maintains the load of the task in a case in which the degree of shared emotion is a predetermined threshold value or greater,
increases the load of the task in a case in which the degree of shared emotion is less than a predetermined threshold value and the degree of achievement is a predetermined threshold value or greater, and
decreases the load of the task in a case in which the degree of shared emotion is less than a predetermined threshold value and the degree of achievement is less than a predetermined threshold value.

4. The information processing device of Claim 1, wherein the load controlling section controls changes in the load, which is set in common for the plurality of users.

5. The information processing device of Claim 1, wherein the load controlling section controls changes in the load, which is set individually for each of the plurality of users.

6. The information processing device of Claim 1, wherein the emotion sharing degree computing section computes the degree of shared emotion by multiplying each of the physiological indices configuring the time-series biometric information by a predetermined coefficient.

7. The information processing device of Claim 6, wherein the coefficient is determined by using a trained model that infers the degree of shared emotion from the time-series biometric information.

8. The information processing device of Claim 1, wherein the task is at least any of a sport, a game, rehabilitation, or answering questions.

9. An information processing method, in which a processor:
from time-series biometric information formed from a plurality of physiological indices of each of a plurality of users who are carrying out an identical task, computes a degree of synchronization of the time-series biometric information of the users;
computes a degree of shared emotion among the respective users using the computed degree of synchronization; and
controls changes in load of the task on the basis of a degree of achievement relating to an extent of achievement of each user with respect to the task, and the computed degree of shared emotion of the respective users.

10. A computer program, causing a computer to execute processing comprising:
from time-series biometric information formed from a plurality of physiological indices of each of a plurality of users who are carrying out an identical task, computing a degree of synchronization of the time-series biometric information of the users;
computing a degree of shared emotion among the respective users using the computed degree of synchronization; and
controlling changes in load of the task on the basis of a degree of achievement relating to an extent of achievement of each user with respect to the task, and the computed degree of shared emotion of the respective users.
